# EUROPÄISCHE PATENTANMELDUNG

(11) **EP 4 349 653 A1**
(43) Date of publication of application: **10.04.2024**
(21) Application number: 21942578.2
(22) Date of filing: 02.08.2021
(51) Int. Cl.: B60R 1/00, B60R 11/04

(54) **AUXILIARY APPARATUS AND VEHICLE**

(30) Priority: 27.05.2021 CN 202110585761; 27.05.2021 CN 202110583962; 27.05.2021 CN 202110585734
(71) Applicant: Ficosa International (Taicang) Company Limited, Suzhou, Jiangsu 215400 (CN)
(72) Inventor: GABRIEL, Gindrey, Suzhou, Jiangsu 215400 (CN); GU, Weibin, Suzhou, Jiangsu 215400 (CN)
(74) Representative: Patentanwälte Olbricht Buchhold Keulertz
(86) International application number: PCT/CN2021/109979
(87) International publication number: WO 2022/247009

(57) **Abstract**

An auxiliary apparatus and a vehicle, which relate to the technical field of automobiles. The auxiliary apparatus includes: a base body having an accommodation cavity, the accommodation cavity having an open end; an auxiliary mechanism (2) disposed in the accommodation cavity; a cover body (3) movably disposed at the open end and movable relative to the open end between an open position and a closed position, the cover body (3) being entirely accommodated in the accommodation cavity when the cover body (3) moves from the closed position toward the open position; and at least one power mechanism disposed in the accommodation cavity, one of the at least one power mechanism being used for driving the auxiliary mechanism (2) to extend and retract through the open end. The auxiliary apparatus can prevent the auxiliary mechanism (2) and the cover body (3) from being extended together, and prevent the auxiliary apparatus from generating large wind resistance and wind noise when it is used.

## Description

### CROSS-REFERENCE RELATED REFERENCE

This application claims priority to Chinese Patent Application No. 202110585761.8, filed on May 27, 2021, Chinese Patent Application No. 202110583962.4, filed on May 27, 2021, and Chinese Patent Application No. 202110585734.0, filed on May 27, 2021, which are hereby incorporated by reference.

### TECHNICAL FIELD

The present invention relates to the technical field of automobiles, in particular to an auxiliary apparatus and a vehicle.

### BACKGROUND

In the automotive field, apparatuses such as radar, rearview mirrors, and cameras that sense the environment around the vehicle are mostly exposed to the outside of the vehicle body, and the detection parts are often contaminated due to environmental factors such as weather or the like. In order to reduce environmental contamination, exposure to the outside of the vehicle body should be avoided when they are not in use. For example, with the continuous development of camera technology, electronic rearview mirrors have appeared in the market to replace traditional optical rearview mirrors. Since the electronic rearview mirror is mostly exposed to the outside of the vehicle body, the lens is often contaminated due to environmental factors such as weather or the like.

Prior art patents such as JP2019131097A, WO2013172688A1, CN208360071U, EP2252481B1, and JP4213760B1 provide devices capable of housing electronic rearview mirrors, in which specifically an accommodation cavity is provided on the vehicle body, and the electronic rearview mirror and the movement mechanism connected thereto are disposed in the accommodation cavity. Therefore, the electronic rearview mirror is accommodated in the vehicle body by the movement mechanism when it is not in use, and is extended out of the vehicle body to collect image information when it needs to be used. However, when the electronic rearview mirror or the movement mechanism connected thereto is damaged, the entire vehicle body needs to be repaired or replaced, resulting in poor user experience.

In addition, in the prior art, the device is further provided with a mirror cover to protect the lens when the lens is housed in the vehicle body. However, when the lens is extended toward the outside of the vehicle body, the mirror cover is driven by the movement mechanism to flip and open toward the outside of the vehicle body, and the mirror cover will be extended out of the vehicle body together with the lens. In this way, on the one hand, the overall volume of the structure extended out of the vehicle body is large, resulting in large wind resistance and wind noise, and on the other hand, a large gap is formed between the lens or the cover body and the accommodation cavity, resulting in poor sealability.

### SUMMARY

In order to solve at least one technical problem existing in the prior art, the present application provides an auxiliary apparatus and a vehicle which can prevent the auxiliary mechanism and the cover body from being extended together, and prevent the auxiliary apparatus from generating large wind resistance and wind noise when it is in use.

The present invention adopts the specific technical solution as below.

An auxiliary apparatus, including a base body having an accommodation cavity, an auxiliary mechanism disposed in the accommodation cavity, a cover body, and at least one power mechanism disposed in the accommodation cavity. The base body has an accommodation cavity, and the accommodation cavity has an open end. The cover body is movably disposed at the open end and is movable relative to the open end between an open position and a closed position. The cover body is entirely accommodated in the accommodation cavity when the cover body moves from the closed position toward the open position. One of the at least one power mechanism is used for driving the auxiliary mechanism to extend and retract through the open end.

Preferably, the auxiliary apparatus includes a cover plate on which the open end is formed, and a seal disposed on at least one selected from the cover body, the cover plate, and the auxiliary mechanism.

Preferably, the cover plate includes an inner cover plate for mounting the cover body, and an outer cover plate provided outside the inner cover plate; and the seal includes a cover-body sealing ring disposed on the cover body, and a cover-plate sealing ring disposed on the outer cover plate.

Preferably, the auxiliary mechanism includes a base portion and a body portion, and a limiting step is formed between the base portion and the body portion; and when the auxiliary mechanism is driven by the power mechanism to extend through the open end, the limiting step fits with the cover-plate sealing ring to seal the open end.

Preferably, the power mechanism includes: a power source assembly; a first motion assembly in transmission connection with the power source assembly and for driving the auxiliary mechanism to move between a retracted position and an extended position; and a second motion assembly in transmission connection with the power source assembly and for driving the cover body to move.

Preferably, there are two power mechanisms, one of which is used for driving the cover body to move relative to the open end between the closed position and the open position, and the other of which is used for driving the auxiliary mechanism to extend and retract through the open end.

Preferably, the auxiliary apparatus includes a heating unit for heating an area between the auxiliary mechanism and the open end when the auxiliary mechanism extends through the open end.

Preferably, the auxiliary apparatus includes a heating unit for heating an area between the cover body and the open end when the cover body is at the closed position.

Preferably, the heating unit is disposed on the cover-plate sealing ring.

Preferably, the heating unit includes a first heating unit and a second heating unit, the first heating unit is disposed on the auxiliary mechanism, and the second heating unit is disposed on the cover body.

Preferably, the auxiliary apparatus includes an electronic rearview mirror apparatus, the auxiliary mechanism includes a camera mechanism, and the cover body includes a mirror cover; the power mechanism includes a first motion assembly for driving the camera mechanism to move between a retracted position and an extended position, a second motion assembly for at least driving the mirror cover to be at the closed position, and a power source assembly that is in transmission connection with the first motion assembly and the second motion assembly; when the first motion assembly, driven by the power source assembly, drives the camera mechanism to move from the extended position toward the retracted position, the second motion assembly, driven by the power source assembly, is capable of driving the mirror cover to move from the open position toward the closed position; and the mirror cover is movable relative to the camera mechanism between the open position and the closed position, and the mirror cover is capable of being accommodated at a side close to the retracted position when the mirror cover moves from the closed position toward the open position.

Preferably, the first motion assembly includes a first linkage mechanism that is in transmission connection with the power source assembly, and an end portion of the first linkage mechanism is connected to the camera mechanism; and the second motion assembly includes a second linkage mechanism that is in transmission connection with the power source assembly, and an end portion of the second linkage mechanism is provided with a positioning plate.

Preferably, the power source assembly includes a motor, a lead screw that is in transmission connection with the motor, and a pulley disposed on the lead screw; the first linkage mechanism and the second linkage mechanism are connected to the pulley; and when moving on the lead screw, the pulley is capable of driving one of the first linkage mechanism and the second linkage mechanism to contract, and the other one to expand.

Preferably, the first linkage mechanism includes a first connecting rod unit, a second connecting rod unit, and a third connecting rod unit which are rotatably connected in sequence; the third connecting rod unit has a first connecting segment, and a second connecting segment at a predetermined angle to the first connecting segment; and the first connecting segment is connected to the camera mechanism, and the second connecting segment is provided with a damping member for providing damping to the camera mechanism.

Preferably, the positioning plate has a positioning position and an operating position; when the camera mechanism moves from the retracted position toward the extended position, the positioning plate is capable of moving from the operation position toward the positioning position to limit the mirror cover at the open position upon arrival of the positioning position; and when the camera mechanism moves from the extended position toward the retracted position, the positioning plate is capable of moving from the positioning position toward the operating position to push the mirror cover to the closed position upon arrival of the operating position.

Preferably, the positioning plate includes a quarter gear, and a side plate connected to the gear; and the electronic rearview mirror apparatus includes a rack engaged with the gear, and the rack is disposed on a moving path of the positioning plate.

Preferably, the auxiliary apparatus includes a first elastic member that provides an elastic reset force to the mirror cover; when the camera mechanism moves from the retracted position toward the extended position, the elastic reset force provided by the first elastic member is capable of driving the mirror cover to move from the closed position toward the open position; and when the camera mechanism moves from the extended position toward the retracted position, the second motion assembly is capable of driving the mirror cover to move from the open position toward the closed position.

Preferably, the auxiliary apparatus includes a slide rail disposed on a moving path of the camera mechanism, and the slide rail has a connecting end and a free end; when the camera mechanism moves from the retracted position toward the extended position, the free end rotates around the connecting end as a center to disengage from the mirror cover, and the first elastic member is capable of driving the mirror cover to move toward the open position; and when the camera mechanism moves from the extended position toward the retracted position, the free end rotates around the connecting end as a center to abut against the mirror cover.

Preferably, the second motion assembly further includes a second elastic member for providing an elastic reset force to the positioning plate; and when the mirror cover moves from the closed position toward the open position, the elastic reset force applied to the positioning plate by the second elastic member enables the mirror cover to move toward the positioning position.

Preferably, the auxiliary apparatus further includes a third elastic member for providing an elastic reset force when the free end rotates.

A vehicle, of which a vehicle body of the vehicle is provided with an accommodation cavity having an open end. The accommodation cavity is mounted with an auxiliary apparatus, and the auxiliary apparatus includes: an auxiliary mechanism disposed in the accommodation cavity; a cover body movably disposed at the open end and movable relative to the open end between an open position and a closed position, the cover body being entirely accommodated in the accommodation cavity when the cover body moves from the closed position toward the open position; and at least one power mechanism disposed in the accommodation cavity, one of the at least one power mechanism being used for driving the auxiliary mechanism to extend and retract through the open end.

The invention has the following advantageous effects:

In the auxiliary apparatus according to embodiments of the present application, the mirror cover can be entirely accommodated in the accommodation cavity when moving toward the open position, and the user can arbitrarily shape the appearance of the mirror cover and the auxiliary apparatus according to the vehicle model. The overall structure of the auxiliary apparatus is simple, the gap between the internal parts and the open end is minimized, which makes it easier to achieve sealing, improves sealability, and effectively reduces wind resistance and wind noise during the driving of the vehicle.

### BRIEF DESCRIPTION OF DRAWINGS

The drawings described herein are for purposes of explanation only and are not intended to limit the scope of the present invention in any way. In addition, the shapes, proportional dimensions and the like of the components in the drawings are merely schematic, and are used to help the understanding of the present invention, but not intended to specifically limit the shapes and proportional dimensions of the components of the present invention. Those skilled in the art, under the teachings of the present invention, may select various possible shapes and proportional dimensions to implement the present invention as appropriate.
FIG. 1 is a schematic diagram of an overall structure of an electronic rearview mirror apparatus according to an embodiment of the present specification;
FIG. 2 is a schematic diagram of an internal structure of an electronic rearview mirror apparatus according to an embodiment of the present specification;
FIG. 3 is a schematic diagram of a state of a mirror cover when it is being opened according to an embodiment of the present specification;
FIG. 4 is a structural schematic diagram of a camera mechanism when it is being extended according to an embodiment of the present specification;
FIG. 5 is a structural schematic diagram of a camera mechanism when it is being retracted according to an embodiment of the present specification;
FIG. 6 is a schematic diagram of a state of a positioning plate in FIG. 3 at an operation position;
FIG. 7 is a schematic diagram of a state of the positioning plate in FIG. 3 at a positioning position;
FIG. 8 is a schematic diagram of a state of the slide rail and the mirror cover in FIG. 3 that are abutted against each other;
FIG. 9 is a schematic diagram of a state of the slide rail and the mirror cover in FIG. 3 that are disengaged from each other;
FIG. 10 is a schematic diagram of a disassembled structure of a cover plate assembly according to an embodiment of the present specification;
FIG. 11 is a schematic diagram of the exterior of a vehicle body using an electronic rearview mirror apparatus according to an embodiment of the present specification;
FIG. 12 is a view taken along the line I-I in FIG. 11;
FIG. 13 is a partial enlarged view of position G in FIG. 11;
FIG. 14 is a cross-sectional view of a cover plate assembly according to an embodiment of the present specification;
FIG. 15 is a partial enlarged view of position E in FIG. 14.

Reference numerals of the above drawings as below:
S. vehicle body;
1. housing; 11. accommodation cavity; 13. through hole;
2. auxiliary mechanism; 21. roller; 22. base portion; 23. body portion;
3. cover body; 31. first connecting shaft; 32. first elastic member;
4. first motion assembly; 41. first linkage mechanism; 42. damping member;
5. second motion assembly; 51. second linkage mechanism; 52. positioning plate; 53. second elastic member; 54. rack;
7. slide rail; 71. connecting end; 72. free end; 75. second connecting shaft; 76. third elastic member;
8. sliding block;
9. motor; 91. transmission wheel; 92. lead screw;
10. cover body assembly; 101. outer cover plate; 102. inner cover plate; 103. cover-plate sealing ring; 104. cover-body sealing ring.

### DESCRIPTION OF EMBODIMENTS

Hereinafter, the technical features of the present invention will be described in detail with reference to the drawings and specific embodiments. It should be understood that these embodiments are merely illustrative of the present invention and are not intended to limit the scope, and that modifications of various equivalent forms of the present invention by those skilled in the art after reading the present invention shall fall within the scope of the present invention.

It should be noted that when an element is referred to as being "disposed" on another element, it may be directly on another element or there may also be an intervening element. When one element is considered to be "connected" to another element, it may be connected directly to another element or there may be an intervening element as well. The terms "vertical," "horizontal," "upper," "lower," "left," "right" and other similar expressions used herein are used for illustrative purposes only and are not meant to be the only embodiment. Unless otherwise defined, all technical and scientific terms used herein have the same meanings as that are generally understood by those skilled in the art belonging to the technical field of the present invention. The terms used herein in the description of the invention are for purposes of describing specific embodiments only and are not intended to limit the present invention. The terms "and/or" as used herein include any and all combinations of one or more related listed items. Moreover, in description of the present invention, "at least one" means one or more than two, unless otherwise indicated.

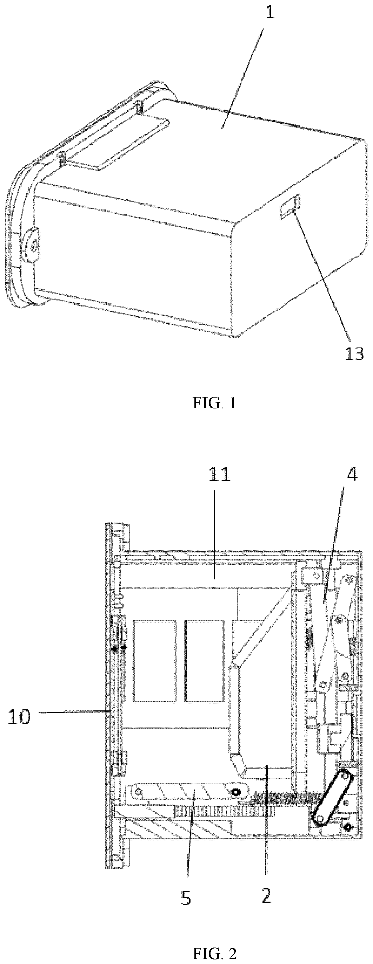

The auxiliary apparatus, the electronic rearview mirror apparatus, and the vehicle according to embodiments of the present specification will be explained and illustrated with reference to FIGs. 1 to 15. It should be noted that, for convenience of explanation, in the embodiments of the present invention, the same reference numerals refer to the same parts. For the sake of brevity, detailed descriptions of the same parts in different embodiments are omitted, and the descriptions of the same parts may be referred to and quoted from each other.

The auxiliary apparatus in the embodiments provided in this specification may be disposed on any vehicle, such as a car, a commercial vehicle, a sport utility vehicle (SUV), a small car, or the like, which is not specifically limited by the embodiments of the present application. In foreseeable embodiments, the technical solution provided by the present application may be applied in any suitable scenario, and the scope of the present application is not limited to application to the vehicle. For example, the auxiliary apparatus may include an electronic rearview mirror apparatus.

The auxiliary apparatus mainly includes an auxiliary mechanism 2, a cover body 3 and at least one power mechanism. One of the at least one power mechanism is used to drive the auxiliary mechanism 2 to extend and retract. When the auxiliary apparatus is an electronic rearview mirror apparatus, the auxiliary mechanism 2 may include a camera mechanism.

The electronic rearview mirror apparatus serves as an auxiliary apparatus applied to a vehicle. The auxiliary mechanism 2 may be a mechanism for performing environmental sensing, including an environmental sensing component such as a radar (e.g., a millimeter-wave radar), a camera, a rearview mirror and the like. Alternatively, the auxiliary mechanism 2 may be a cleaning apparatus for performing cleaning. Of course, in foreseeable embodiments, the auxiliary mechanism 2 may be other auxiliary apparatuses with functions other than environmental sensing and cleaning. Correspondingly, the camera mechanism may correspond to any one of the above-mentioned auxiliary functions. This specification is mainly elaborated with the camera mechanism as a main application scenario, but based on the above description, it can be seen that the scope of the embodiments of the present application is not thereby limited.

The radar realizes the perception of the surrounding environment by sending a signal to the outside and receiving the echo reflected by an obstacle, which can be used to detect the speed of the obstacle around the vehicle and the distance between the obstacle and the vehicle, i.e., to realize speed measurement and distance measurement for the obstacle. The camera is a device with an image acquisition function, which can be used to detect obstacles around the vehicle, including front and rear vehicles and side vehicles on the vehicle's driving path. The rearview mirror can be used to directly obtain external information about the rear, side and bottom of the vehicle. Alternatively, the auxiliary mechanism 2 may be a cleaning mechanism for performing cleaning on the vehicle. Of course, in foreseeable embodiments, the auxiliary mechanism 2 may also be other auxiliary parts with functions other than environmental sensing and cleaning. The type of the auxiliary mechanism 2 is not limited in the present application, and may be any one of the above-mentioned auxiliary functions. This specification is mainly elaborated with the auxiliary mechanism 2 being a camera as a main application scenario, but based on the above description, it can be seen that the scope of the embodiments of the present application is not thereby limited.

The auxiliary mechanism 2 may be provided with a camera unit for collecting visual information. When the auxiliary apparatus needs to be used, the power mechanism can be used to drive the auxiliary mechanism 2 to extend to collect external visual information. When the auxiliary apparatus does not need to be used, the power mechanism can be used to drive the auxiliary mechanism 2 to retract, thus reducing the contamination of the camera unit. The cover body 3 is used to protect the auxiliary mechanism 2 when it is retracted.

The auxiliary mechanism 2, the cover body 3 and the at least one power mechanism may be arranged directly in an accommodation cavity of a base body. The base body may be a vehicle body, for example, a mounting hole is reserved in the vehicle body, and the auxiliary mechanism 2, the cover body 3, and the at least one power mechanism are mounted in the mounting hole. As shown in FIG. 1 and FIG. 2, the auxiliary apparatus may include a housing 1. The auxiliary mechanism 2, the cover body 3, and the power mechanism may all be accommodated in the housing 1 to form an integral module, and the integral module is placed in the accommodation cavity of the base body. When the auxiliary apparatus is an electronic rearview mirror apparatus, the cover body 3 may include a mirror cover.

The housing 1 may have any conventional regular or irregular structure such as a rectangular shape, a spherical shape, a cylindrical shape, or the like. The housing 1 has an accommodation chamber 11 that has an open end, through which the auxiliary mechanism 2 can extend when in use. In order to facilitate the connection of the power mechanism in the housing 1 with an external power source or a control circuit, the housing 1 is further provided with a through hole 13 for facilitating power supply and control of the power mechanism.

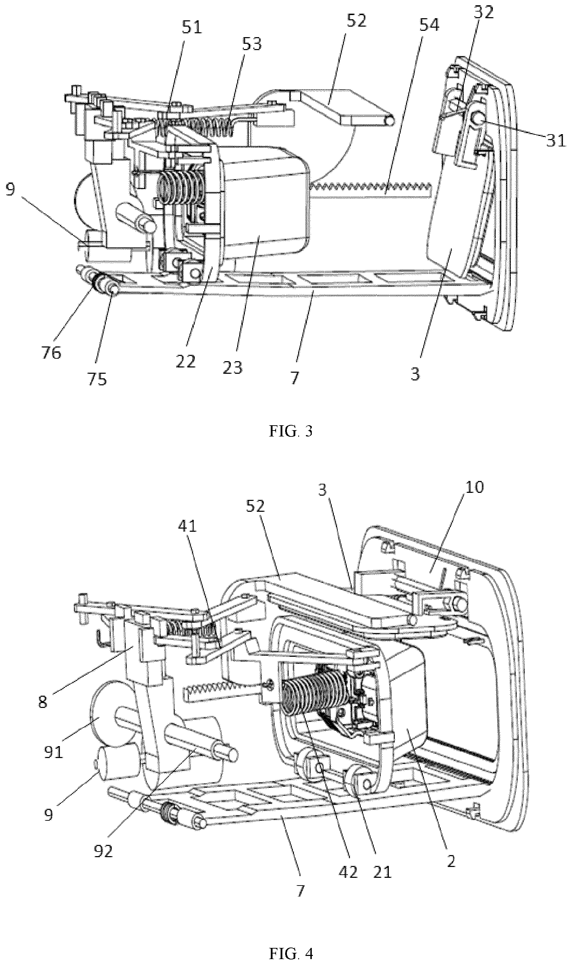

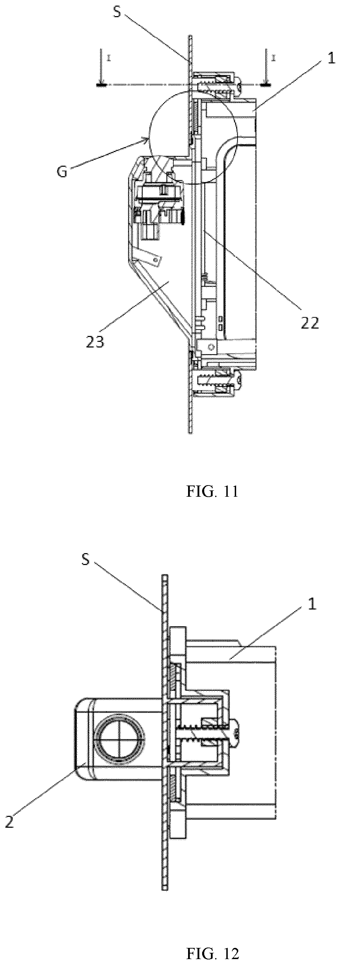

The auxiliary mechanism 2 includes a shell for providing a camera unit. As shown in FIGs. 3 and 11, the shell is provided with a base portion 22 and a body portion 23, the outer contour dimension of the base body portion 22 is larger than the outer contour dimension of the body portion 23, and a limiting step is formed between the base body portion 22 and the body portion 23. When the auxiliary mechanism 2 extends out, the body portion 23 and the base portion 22 may be located at both sides of the open end, respectively, and the body portion 23 is extended out of the open end. Therefore, when the body portion 23 is extended out of the open end, the limiting step between the base portion 22 and the body portion 23 can fit with the open end to form sealing. In order to reduce the wind resistance when the auxiliary mechanism 2 is extended, the body portion 23 may be a tapered structure having a streamlined shape.

The cover body 3 is movably disposed at the open end, and when the auxiliary mechanism 2 needs to be extended out, the cover body 3 is opened to allow the auxiliary mechanism 2 to extend through the open end; when the auxiliary means 2 needs to be retracted, the cover body 3 is closed to seal the accommodation chamber 11 or the accommodating cavity. Correspondingly, according to the opening operation and the closing operation of the cover body 3, the cover body 3 has an open position and a closed position with respect to the open end. When the cover body 3 is at the open position, the cover body 3 opens the open end to allow the auxiliary mechanism 2 to extend through the open end. When the cover body 3 is at the closed position, the cover body 3 closes the open end. When the cover body 3 is at the open position, the cover body 3 is entirely accommodated in the accommodation chamber 11 or the accommodating cavity of the base body.

The auxiliary apparatus, by being formed as an integral module, can be mounted as a separate component on the vehicle body or on other types of bases, and can be individually disassembled from the vehicle body when it needs to be replaced or repaired. When the auxiliary apparatus needs to be mounted on the vehicle body S, a mounting hole with a contour size and shape matching a contour size and shape of the housing 1 may be pre-designed on the vehicle body S, and then the integral module may be mounted in the mounting hole, with the open end being directed toward the outside of the vehicle body, to allow the auxiliary mechanism 2 to be extended to collect the side-rear visual information of the vehicle body. As shown in FIGs. 11 and 12, in the auxiliary apparatus, only the auxiliary mechanism 2 can extend from the open end, and the cover body 3 is entirely accommodated in the accommodation chamber 11 or the accommodating cavity of the base body, so that the structure outside the vehicle body S is greatly reduced in use compared with the conventional auxiliary apparatus, thereby reducing the wind resistance and wind noise during the driving of the vehicle.

Meanwhile, the auxiliary apparatus has good versatility and can be adapted to any vehicle body. It is well known that there are differences in the vehicle body design of different vehicle models. When the auxiliary apparatus is arranged on different vehicle bodies, the shape of the cover body can be designed adaptively according to the shape of the vehicle body, so that the cover body can be adapted to the overall shape of the vehicle body when mounted on the vehicle body, so as to meet the installation needs of different vehicle models. Therefore, when the auxiliary mechanism is retracted into the accommodation chamber, the cover body can be regarded as a part of the vehicle body due to its adaptability to the whole vehicle body, thereby achieving a good hiding effect.

In the present specification, the auxiliary apparatus may include a cover plate assembly 10 detachably mounted on the housing 1, and an open end fitted to the cover body 3 is formed on the cover plate assembly 10. The cover body 3 is rotatably connected to the cover plate assembly 10. Therefore, when components inside the housing 1 need to be replaced and repaired, the components can be taken out by detaching the cover plate assembly 10. The cover plate assembly 10 may be a multi-layer structure or a single-layer structure, and is capable of maintaining the sealing of the open end when the auxiliary mechanism 2 is extended through the open end.

The cover plate assembly 10 may be mounted directly on the base body, and the open end of the cover plate assembly 10 may serve as the open end of the accommodation cavity. Alternatively, in an embodiment in which the auxiliary apparatus includes the housing 1, the cover plate assembly 10 may be mounted on the housing 1, and the open end of the cover plate assembly 10 may serve as an open end of the accommodation chamber 11 of the housing 1.

Specifically, the cover plate assembly 10 includes a cover plate on which the open end is disposed. The auxiliary apparatus further includes a seal provided on at least one selected from the cover body 3, the cover plate and the auxiliary mechanism 2, so that when the cover body 3 or the auxiliary mechanism 2 is located at the open end, the sealing between the cover body 3 or the auxiliary mechanism 2 and the open end is provided by the seal.

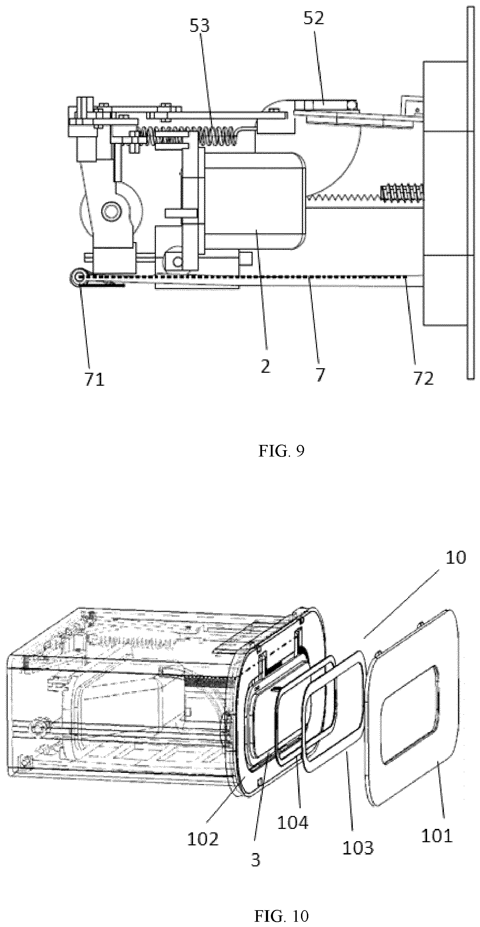

In an embodiment, as shown in FIG. 10, the cover plate includes an inner cover plate 102 for mounting the cover body 3, and an outer cover plate 101 provided outside the inner cover plate 102. The outer cover plate 101 is the outermost component, and the inner cover plate 102 is connected to the base body or the edge of the housing 1. The seal includes a cover-body sealing ring 104 disposed on the cover body 3, and a cover-plate sealing ring 103 disposed on the outer cover plate 101.

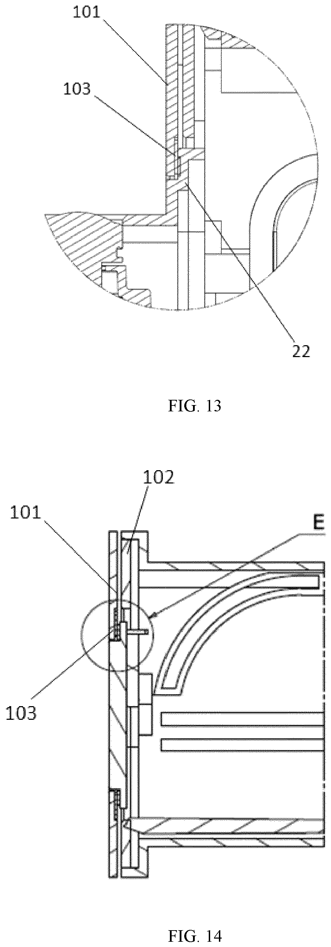

In another embodiment, as shown in FIGs. 10 and 13, the cover plate assembly 10 includes an outer cover plate 101, an inner cover plate 102, and a sealing mechanism disposed between the outer cover plate 101 and the inner cover plate 102. The outer cover plate 101 is an outermost component, the inner cover plate 102 is connected to the edge of the housing 1, and the sealing mechanism is installed in a sealing cavity between the outer cover plate 101 and the inner cover plate 102. When the body portion 23 of the camera mechanism extends through the open end, the base portion 22 of the camera mechanism can fit with the sealing mechanism to maintain the sealing of the open end.

Specifically, when installed, the outer cover 101 and the inner cover 102 may be snap-fit connected to limit the sealing mechanism in the sealing cavity, or they may be connected by a bolt connection or a threaded connection. The sealing mechanism may be at least one sealing ring and may include a cover-plate sealing ring 103 close to the outer cover plate 101 and a cover-body sealing ring 104 close to the cover body 3. The cover-body sealing ring 104 is used to seal the cover body 3 and the open end when the cover body 3 is at the closed position, and the cover-plate sealing ring 103 is used to seal the auxiliary mechanism 2 and the open end when the auxiliary mechanism 2 extends through the open end. The cover-body sealing ring 104 may be mounted on the cover body 3 and move together with the cover body 3 when the cover body 3 performs opening and closing operations. The cover-plate sealing ring 103 may be mounted on a groove on the back of the outer cover plate 101.

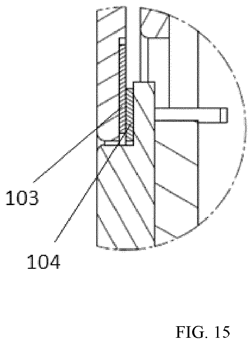

As shown in FIG. 14 and FIG. 15, when the cover body 3 performs the closing operation, the cover-body sealing ring 104 and the cover-plate sealing ring 103 together provide a seal between the cover body 3 and the open end. When the cover body 3 performs the opening operation, the auxiliary mechanism 2 extends through the open end, and as shown in FIG. 11, the cover-body sealing ring 104 is accommodated in the accommodation cavity together with the cover body 3, and the cover-body sealing ring 103 seals the auxiliary mechanism 2. When the body portion 23 of the auxiliary mechanism extends through the open end, the base portion 22 of the auxiliary mechanism can fit with the cover plate sealing ring 103 to maintain the sealing of the open end. It can be seen that the cover-plate sealing ring 103 can always play a sealing role to the open end when the cover body 3 performs the opening operation and the closing operation, so as to avoid a gap between the cover body 3 and the open end or between the auxiliary mechanism 2 and the open end.

In the present specification, the auxiliary apparatus includes a heating unit for heating an area between the auxiliary mechanism 2 and the open end when the auxiliary mechanism 2 extends through the open end, so as to avoid failure of the auxiliary apparatus due to freezing of the auxiliary mechanism 2 when the auxiliary apparatus is used in a low-temperature environment. Alternatively, the heating unit is used for heating an area between the cover body 3 and the open end when the cover body 3 is at the closed position.

Generally, both the cover body 3 and the auxiliary mechanism 2 are in direct contact with the outside environment through the open end during use, so that they are easily frozen at the open end. When located in the accommodation cavity, the cover body 3 and the auxiliary mechanism 2 are generally not at risk of freezing as they are not in direct contact with the outside environment. Therefore, in order to ensure the normal use of the auxiliary apparatus in a low-temperature environment, there is a need to take into account the unfreezing of the cover body 3 and the auxiliary mechanism 2 when they are fitted to the open end, i.e., on the one hand, it needs to be ensured that the cover body 3 can be opened in the low-temperature environment, and on the other hand, the auxiliary mechanism 2 cannot be frozen in the low-temperature environment, so as to be retracted through the open end.

When the cover body 3 is closed at the open end, the auxiliary mechanism 2 is retracted into the accommodation cavity, and when the cover body 3 is accommodated in the accommodation cavity, the auxiliary mechanism 2 extends out of the open end. Therefore, the heating unit may be provided around the open end for heating the cover body 3 or the auxiliary mechanism 2.

In an embodiment, the heating unit may be provided on the cover plate or the seal to be able to heat the cover body 3 or the auxiliary mechanism 2 at the open end.

Specifically, the heating unit may be disposed on the cover plate, which may be the outer cover plate 101 or the inner cover plate 102. When the cover body 3 is closed at the open end, the cover plate and the cover body 3 are in contact with each other through the cover-body sealing ring 104 and the cover-plate sealing ring 103, so that the heating unit can heat the cover body 3 across the cover-body sealing ring 104 and the cover-plate sealing ring 103, thereby preventing the cover body 3 from being frozen and not being able to be opened in a low-temperature environment. When the cover body 3 is accommodated in the accommodation cavity, and the auxiliary mechanism 2 extends out of the accommodation cavity through the open end, the cover plate and the shell of the auxiliary mechanism 2 are in contact with each other through the cover-plate sealing ring 103, so that the heating unit can heat the shell of the auxiliary mechanism 2 across the cover-plate sealing ring 103, thereby preventing the auxiliary mechanism 2 from being frozen and being unable to be retracted in a low-temperature environment. Therefore, the heating unit can heat the area between the cover body 3 and the open end or the area between the auxiliary mechanism 2 and the open end.

Preferably, the heating unit may be provided on the cover-plate sealing ring 103. Compared with the cover plate, the cover-plate sealing ring 103 can be in direct contact with the cover body 3 and the auxiliary mechanism 2, thereby achieving better heating effect and higher heating efficiency. In addition, by providing the heating unit on the cover-plate sealing ring 103, the heating area is small, and the heating unit is hidden inside the cover plate without affecting the overall structure of the cover plate assembly 10.

In some feasible embodiments, the heating unit includes a first heating unit and a second heating unit, the first heating unit is provided on the auxiliary mechanism 2, and the second heating unit is provided on the cover body 3. Specifically, the first heating unit may be provided on the shell of the auxiliary mechanism 2, and can continuously heat the auxiliary mechanism 2 during the extension and retraction of the auxiliary mechanism 2. The second heating unit is provided on the cover body 3, and can continuously heat the cover body 3 when the cover body 3 performs the opening operation and the closing operation. Alternatively, in some possible embodiments, the second heating unit is provided on the cover-body sealing ring 104, and can continuously heat the cover body 3 when the cover body 3 performs the opening operation and the closing operation.

The heating unit includes an electric heating layer provided with an electric heating wire. The auxiliary apparatus may further include a temperature control unit for regulating a heating power of the electric heating wire and a temperature sensing unit for obtaining a heating temperature. The temperature control unit can regulate the heating power of the electric heating wire. The temperature sensing unit may be a temperature sensor. When the temperature obtained by the temperature sensing unit indicates a low-temperature environment, the heating power of the electric heating wire can be regulated by the temperature control unit to reach a set temperature to prevent the cover body 3 or the auxiliary mechanism 2 from being frozen. Of course, the temperature control unit and the temperature sensing unit may be disposed on a vehicle, so that the monitoring of the temperature and the regulation of the heating power of the electric heating layer can be realized by the temperature control unit and the temperature sensing unit that come with the vehicle, which are not specifically limited in the embodiment of the present specification.

In an embodiment, the cover plate assembly 10 is detachably mounted on the housing 1, and the cover body 3 is rotatably connected to the cover plate assembly 10. Therefore, when the components inside the housing 1 need to be replaced and repaired, the components can be taken out by detaching the cover plate assembly 10.

In this embodiment, the cover plate assembly 10 can also be designed in an adaptive shape according to the shape of the vehicle body S, so that the cover plate assembly 10 and the cover body 3 adapt to the overall shape of the vehicle body S. In addition, since the cover plate assembly 10 is detachably mounted on the housing 1, the cover plate assembly 10 and the cover body 3 can be integrally provided, so that only the entire cover plate assembly 10 needs to be disassembled when the cover plate assembly 10 is disposed on different models of vehicles, without the need to replace other components of the auxiliary apparatus other than the cover plate assembly 10. For example, when the auxiliary apparatus is replaced from an A-model vehicle body to a B-model vehicle body, the cover plate assembly 10 is integrally disassembled and then replaced with the cover plate assembly 10 that is adapted to the shape of the B-model vehicle body, thereby improving the versatility of the auxiliary apparatus.

Specifically, an end of the cover body 3 is provided with a first connecting shaft 31, and when the auxiliary apparatus is provided with the cover plate assembly 10, the inner cover plate 102 is provided with a connecting portion that is hinged with the first connecting shaft 31. The cover body 3 can be driven by one of the at least one power mechanism to at least perform an opening operation or a closing operation. The opening operation is to rotate the cover body 3 to open the open end, and the closing operation is to rotate the cover body 3 to close the open end.

When one power mechanism drives the auxiliary mechanism 2 to move, the auxiliary mechanism 2 has a retracted position and an extended position. When the auxiliary mechanism 2 moves from the retracted position toward the extended position, the cover body 3 moves from the closed position toward the open position. When the auxiliary mechanism 2 moves from the extended position toward the retracted position, the cover body 3 moves from the open position toward the closed position. When the cover body 3 moves from the closed position toward the open position, the cover body 3 is entirely accommodated in the accommodation cavity 11, that is, the cover body 3 is entirely accommodated on the side close to the retracted position, thereby preventing the cover body 3 from being extended together with the auxiliary mechanism 2, so as to reduce wind resistance and wind noise.

As shown in FIGs. 11 and 12, in the electronic rearview mirror apparatus, only the camera mechanism can extend out of the open end, so that the structure of the electronic rearview mirror outside the vehicle body S when in use is greatly reduced compared to the conventional electronic rearview mirror apparatus, thereby reducing wind resistance and wind noise during driving of the vehicle.

In the specification, the number of the power mechanism may be one, and the one power mechanism drives both the cover body 3 and the auxiliary mechanism 2 to move. Alternatively, the number of the power mechanism may be two, one power mechanism is used to drive the cover body 3 to move between the closed position and the open position, and the other power mechanism is used to drive the auxiliary mechanism 2 to extend and retract through the open end.

In the embodiment, when the number of the power mechanism is one, the power mechanism includes a power source assembly, and a first motion assembly 4 and a second motion assembly 5 that are in transmission connection with the power source assembly. The first motion assembly 4 is used to drive the auxiliary mechanism 2 to move between a retracted position and an extended position, and the second motion assembly 5 is used to drive the cover body 3 to move.

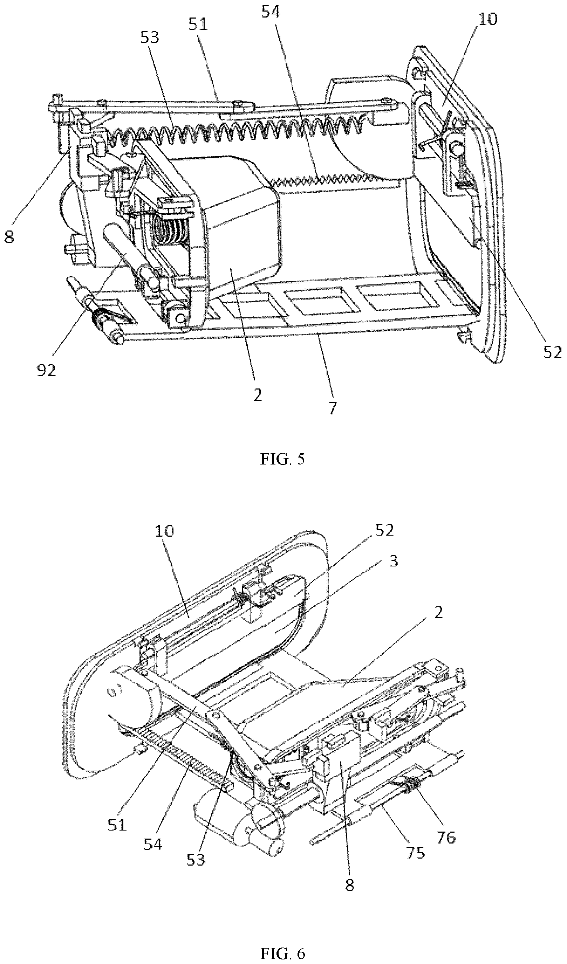

Specifically, as shown in FIGs. 4 and 5, the first motion assembly 4 includes a first linkage mechanism 41 that is in transmission connection with the power source assembly. An end portion of the first linkage mechanism 41 is connected to the auxiliary mechanism 2. The first linkage mechanism 41 is capable of performing contraction and expansion operations under the driving of the power source assembly, to drive the auxiliary mechanism 2 to move between the retracted position and the extended position.

Generally speaking, when the auxiliary apparatus is not in use, the auxiliary mechanism 2 should be retracted into the accommodation cavity 11, so that the first linkage mechanism 41 can be in a retracted state; when the auxiliary mechanism 2 needs to be extended out of the accommodation cavity 11, the power source assembly is turned on to drive the first linkage mechanism 41 to expand, so as to drive the auxiliary mechanism 2 to move to the extended position.

In a specific embodiment, the first linkage mechanism 41 includes a first connecting rod unit, a second connecting rod unit, and a third connecting rod unit which are hinged in sequence. The third connecting rod unit has a horizontal segment that is substantially horizontal and a vertical segment that is substantially vertical, i.e., the third connecting rod unit is a T-shaped structure. Both ends of the horizontal segment may be rotatably connected to the second connecting rod unit and the auxiliary mechanism 2, respectively. The vertical segment is provided with a damping member 42 for providing damping and thrust to the auxiliary mechanism 2.

In this embodiment, the three connecting rod units are hinged by pins, and the horizontal segment is hinged to the shell of the camera mechanism. The damping member 42 may be an elastic member, which can provide a corresponding force to the camera mechanism 41 when the first linkage mechanism 41 performs contraction and expansion movement. When the first linkage mechanism 41 is in a contracted state, as shown in FIG. 5, the camera mechanism is in the retracted position, at which time the damping member 42 is compressed so that the camera mechanism has a tendency to move toward the extended position, i.e., the damping member 42 provides a pushing force to the camera mechanism. When the first linkage mechanism 41 is in an expanded state, the damping member 42 releases the accumulated elastic potential energy to drive the camera mechanism to move toward the extended position, at which time the damping member 42 provides resistance to the camera mechanism. Therefore, when the camera mechanism is extended, if the camera mechanism is applied with an external force, the resistance provided to the camera mechanism by the damping member 42 helps the camera mechanism to be reset, thereby preventing the camera mechanism from being retracted due to an accidental touch or an external impact force.

In an embodiment, the auxiliary apparatus includes a first elastic member 32 that provides an elastic reset force to the cover body 3. The combined action of the first elastic member 32 and the second motion assembly 5 drives the cover body 3 to move between the closed position and the open position.

As shown in FIG. 3, when the auxiliary apparatus is not in use, the auxiliary mechanism 2 is retracted into the accommodation cavity 11, the cover body 3 is at the closed position, at this time, the elastic reset force provided by the first elastic member 32 to the cover body 3 causes the cover body 3 to have a tendency to rotate toward the accommodation chamber 11. When the auxiliary mechanism 2 moves from the retracted position toward the extended position, the elastic reset force provided by the first elastic member 32 can drive the cover body 3 to move toward the open position. When the auxiliary mechanism 2 moves from the extended position toward the retracted position, the second motion assembly 5 can drive the cover body 3 to move from the open position toward the closed position.

In some possible embodiments, the first elastic member 32 may be a torsion spring, and may be disposed on the first connecting shaft 31 of the cover body 3, to provide the cover body 3 with an elastic reset force capable of driving the cover body 3 to rotate to open. When the cover body 3 is at the closed position, the first elastic member 32 applies an upward torsion force to the first connecting shaft, so that the cover body 3 moves toward the open position when it loses an abutting contact. When the second motion assembly 5 drives the cover body 3 to move from the open position to the closed position, the first elastic member 32 can accumulate elastic potential energy.

In some possible embodiments, the first elastic member 32 is a spring, one end of which is connected to the cover body 3 and the other end of which is connected to the cover plate assembly 10, so as to provide the cover body 3 with an elastic reset force capable of driving the cover body 3 to rotate to open. When the cover body 3 is at the closed position, the first elastic member 32 applies a pushing force to the cover body 3 to drive it to move toward the open position, so that the cover body 3 moves toward the open position when it loses an abutting contact. When the second motion assembly 5 drives the cover body 3 to move from the open position to the closed position, the first elastic member 32 can accumulate elastic potential energy again.

Specifically, the second motion assembly 5 may include a second linkage mechanism 51 that is in transmission connection with the power source assembly, and a positioning plate 52 disposed at an end portion of the second linkage mechanism 51. The positioning plate 52 has a positioning position and an operation position. When the auxiliary mechanism 2 moves from the retracted position toward the extended position, the positioning plate 52 can move from the operation position toward the positioning position to limit the cover body 3 to the open position upon arrival of the positioning position. When the auxiliary mechanism 2 moves from the extended position toward the retracted position, the positioning plate 52 can move from the positioning position toward the operation position to push the cover body 3 to the closed position upon arrival of the operation position.

Similar to the first linkage mechanism 41, the second linkage mechanism 51 may also include a fourth connecting rod unit, a fifth connecting rod unit, and a sixth connecting rod unit that are hinged in sequence. The three connecting rod units can be contracted and expanded driven by the power mechanism after being hinged by pins. The sixth connecting rod unit is connected to the positioning plate 52, and the positioning plate 52 can perform a pushing action on the cover body 3 when the second linkage mechanism 51 moves.

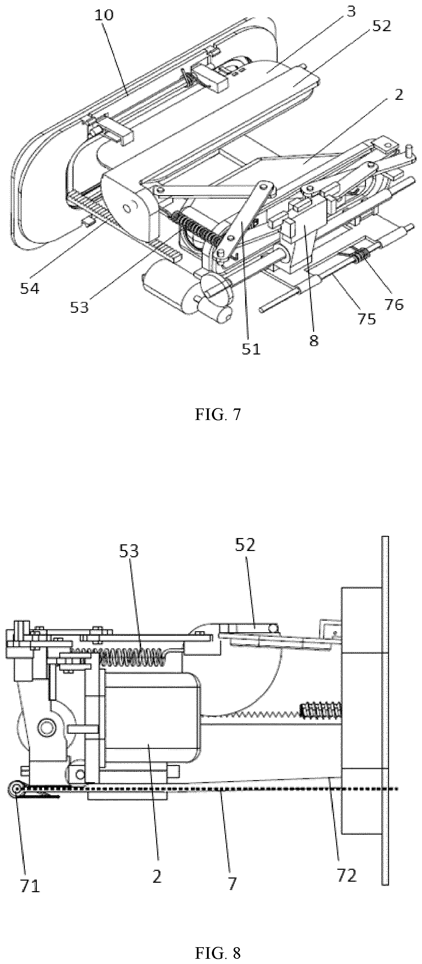

In a specific embodiment, as shown in FIGs. 6 and 7, the positioning plate 52 includes a quarter gear and a side plate connected to the gear. The electronic rearview mirror apparatus includes a rack 54 engaged with the gear, and the rack 54 is disposed on a moving path of the positioning plate 52.

In this embodiment, the rack 54 is fixed relative to the positioning plate 52, and the gear is provided with a shaft that is hinged to the sixth connecting rod unit. Through the meshing transmission of the gear with the rack 54, the shaft of the gear moves back and forth in the direction of the rack 54, to enable the positioning plate 52 to move between the positioning position and the operation position.

For the purpose of positioning and pushing the cover body 3, the side plate extends longitudinally towards the inner side of the accommodation chamber. When the gear moves to the positioning position, the side plate is located just above the cover body 3, so as to limit the rotation of the cover body 3. That is, the rotation of the cover body 3 is limited by the cooperation of the first elastic member 32 and the side plate, so as to position the cover body 3 at the open position, at which time the camera mechanism 2 can be smoothly extended through the open end. When the gear is driven from the positioning position toward the operation position, the side plate is driven by the gear to rotate, and the side plate that is rotating can push the cover body 3 to rotate in a direction away from the accommodation chamber 11, until the gear reaches the operation position, at which time the side plate pushes the cover body 3 to the closed position.

Further, the second motion assembly 5 further includes a second elastic member 53 that provides an elastic reset force to the positioning plate 52. When the cover body 3 moves from the closed position toward the open position, the movement of the cover body 3 is driven by the elastic reset force applied to the positioning plate 52 by the second elastic member 53. When the auxiliary apparatus is provided with the housing 1, the second elastic member 53 may be provided between the positioning plate 52 and the inner wall of the housing 1, so that the second elastic member 53 in conjunction with the sixth connecting rod unit can pull the positioning plate 52 to move when the cover body 3 is opened. In particular, when the cover body 3 loses an abutting contact, under the action of the first elastic member 32, the cover body 3 is driven to move from the closed position toward the open position, at this time, the positioning plate 52 can be pushed by the cover body 3, and can quickly move to the positioning position under the cooperation of the second elastic member 53, so as to limit the cover body 3 that performs the opening operation.

In other feasible embodiments, the first elastic member 32 may also provide the cover body 3 with an elastic reset force to cause the cover 3 have a tendency to rotate away from the accommodation chamber 11. Specifically, when the auxiliary mechanism 2 moves from the retracted position toward the extended position, the second motion assembly 5 can drive the cover body 3 to move from the closed position toward the open position. When the auxiliary mechanism 2 moves from the extended position toward the retracted position, the elastic reset force provided by the first elastic member 32 can drive the cover body 3 to move from the open position toward the closed position.

Unlike the above embodiments, the first elastic member 32 can provide the cover body 3 with an elastic reset force for causing the cover body 3 to perform a closing operation, and the second motion assembly 5 further includes a pulley mechanism disposed between the cover body 3 and the positioning plate 52, the pulley mechanism including a pulley and a belt and being used to drive the cover body 3 to move from the closed position toward the open position.

In this embodiment, when the camera mechanism moves from the retracted position toward the extended position, the positioning plate 52 can move from the operation position to the positioning position, and during the movement of the positioning plate 52, the positioning plate 52 drives, through the pulley mechanism, the cover body 3 to rotate toward the accommodation chamber 11, to cause the cover body 3 to perform the opening operation. When the camera mechanism moves from the extended position to the retracted position, the positioning plate 52 can move from the positioning position to the operation position, and the elastic reset force provided by the first elastic member 32 drives the cover body 3 to rotate away from the accommodation chamber 11, to cause the cover body 3 to perform the closing operation.

Alternatively, in some feasible embodiments, the opening operation and the closing operation of the cover body 3 may be driven only by the second motion assembly 5. As in the previous embodiment, the second motion assembly 5 includes a pulley mechanism disposed between the cover body 3 and the positioning plate 52, the pulley mechanism including a pulley and a belt and being used to drive the cover body 3 to move between the closed position and the open position.

In this embodiment, when the camera mechanism moves from the retracted position toward the extended position, the positioning plate 52 can move from the operation position to the positioning position, and during the movement of the positioning plate 52, the positioning plate 52 drives, through the pulley mechanism, the cover body 3 to rotate toward the accommodation chamber 11, so that the cover body 3 moves from the closed position to the open position. When the camera mechanism moves from the extended position toward the retracted position, the positioning plate 52 can move from the positioning position toward the operation position, and during the movement of the positioning plate 52, the positioning plate 52 drives, through the pulley mechanism, the cover body 3 to rotate toward a direction away from the accommodation chamber 11, so that the cover body 3 moves from the open position to the closed position.

In other feasible embodiments, when the number of the power mechanism is two, the two power mechanisms includes a first power mechanism and a second power mechanism. The first power mechanism includes a first power source assembly, and a first motion assembly 4 that is in transmission connection with the first power source assembly. The second power mechanism includes a second power source assembly, and a second motion assembly 5 that is in transmission connection with the second power source assembly.

Different from all the above embodiments, in this embodiment, the first motion assembly 4 and the second motion assembly 5 are respectively driven by a corresponding power source assembly, so as to independently drive the movement of the cover body 3 and the movement of the auxiliary mechanism 2.

When the electronic rearview mirror apparatus is not in use, the cover body 3 should close the open end of the accommodation chamber 11. When the electronic rearview mirror apparatus needs to be used, the cover body 3 should be rotated toward the accommodation chamber 11, that is, the cover body 3 should be rotated toward the side close to the retracted position to open the open end. As can be seen, the positioning position of the positioning plate 52 is located at the proximal end of the rack 54 relative to the operation position, and the operation position of the positioning plate 52 is located at the distal end of the rack 54. Therefore, when the electronic rearview mirror apparatus is not in use, the second linkage mechanism 51 is in a expanded state; when the electronic rearview mirror apparatus needs to be used, the power mechanism drives the second linkage mechanism 51 to be in a contracted state.

In a specific embodiment, as shown in FIGs. 4 and 5, the power source assembly includes a motor 9, a lead screw 92 that is in transmission connection with the motor 9, and a sliding block 8 disposed on the lead screw 92. The motor 9 is provided with a motor shaft, and the motor shaft is connected to the lead screw 92 through a transmission wheel 91. The sliding block 8 is slidably disposed on the lead screw 92, and the sliding block 8 can be driven to move on the lead screw 92 by the motor 9 that runs.

The first linkage mechanism 41 and the second linkage mechanism 51 are connected to the sliding block 8. When the sliding block 8 moves on the lead screw 92, the sliding block 8 drives one of the first linkage mechanism 41 and the second linkage mechanism 51 to contract and the other to expand. Specifically, when the auxiliary apparatus is not in use, the first linkage mechanism 41 is in a contracted state and the second linkage mechanism 51 is in an expanded state. When the auxiliary apparatus needs to be used, the motor 9 is started to rotate in a first direction to drive the sliding block 8 to move toward the first linkage mechanism 41, so that the sliding block 8 can drive the first linkage mechanism 41 to switch from the contracted state to the expanded state, so as to drive the auxiliary mechanism 2 to move toward the extended position, and at the same time, the sliding block 8 drives the second linkage mechanism 51 to be unlocked from the expanded state and to be switched to the contracted state, so as to drive the positioning plate 52 to move toward the positioning position.

When the auxiliary mechanism needs to be retracted, the motor 9 is started to rotate in a second direction to drive the sliding block 8 to move toward the second linkage mechanism 51, so that the sliding block 8 can drive the second linkage mechanism 51 to switch from the contracted state to the expanded state, so as to drive the positioning plate 52 to move toward the operation position, and at the same time, the sliding block 8 drives the first linkage mechanism 41 to be unlocked from the expanded state and to be switched to the contracted state, so as to drive the auxiliary mechanism 2 to move toward the retracted position.

Of course, the number of the sliding block 8 may not be limited to one. In expandable embodiments, the first linkage mechanism 41 and the second linkage mechanism 51 are connected to two sliding blocks, and the above actions can also be accomplished by the movement of the two sliding blocks on the lead screw 92.

In this embodiment, the motor 9 can be controlled to rotate in the first direction and the second direction, to realize the transmission of the first motion assembly 4 and the second motion assembly 5 through the lead screw 92 and the sliding block 8, so as to realize the cooperation action between the auxiliary mechanism 2 and the cover body 3. The first direction and the second direction are opposite directions. The first direction may be a forward direction, and the second direction may be a reverse direction; or the first direction may be a reverse direction, and the second direction may be a forward direction. Of course, the logic of the motor 9 controlling the first motion assembly 4 and the second motion assembly 5 may not be limited to the above examples, which is not specifically limited in the present application.

In an embodiment, as shown in FIG. 8 and FIG. 9, the auxiliary apparatus further includes a slide rail 7 disposed on the moving path of the auxiliary mechanism 2, the slide rail 7 having a connecting end 71 and a free end 72. When the auxiliary mechanism 2 moves from the retracted position toward the extended position, the free end 72 rotates around the connecting end 71 as a center to disengage from the cover body 3. When the auxiliary mechanism 2 moves from the extended position toward the retracted position, the free end 72 rotates around the connecting end 71 as a center to abut against the cover body 3.

Specifically, the slide rail 7 is disposed at the bottom of the accommodation chamber 11, and a roller 21 in contact with the slide rail 7 is disposed below the shell of the auxiliary mechanism 2. The connecting end 71 of the slide rail 7 is provided with a second connecting shaft 75 which can be hinged to the rear wall of the housing 1, so that the free end 72 of the slide rail 7 can rotate freely around the connecting end 71 as a center.

In this embodiment, when the open end is closed by the cover body 3, since the first elastic member 32 keeps applying an elastic reset force on the cover body 3, the free end 72 of the slide rail 7 abuts against the cover body 3 to prevent the cover body 3 from being opened inwardly. When the free end 72 rotates around the connecting end 71 as a center until the free end 72 disengages from the cover body 3, the cover body 3 loses the abutting contact with the free end 72 and can be opened inwardly by the elastic reset force of the first elastic member 32 until the cover body 3 reaches the open position.

In order to enable the free end 72 to rotate to disengage from the cover body 3, the slide rail 7 has a certain slope and includes a first stepped portion and a second stepped portion. When the auxiliary mechanism 2 is at the retracted position, the roller 21 below the auxiliary mechanism 2 stays at the first stepped portion, and at this time the free end 72 remains in abutment with the cover body 3. When the auxiliary mechanism 2 is driven by the first linkage mechanism 41 to move toward the extended position and the roller 21 moves through the slope to the second stepped portion, the free end 72 rotates downward around the connecting end 71 as a center, so that the cover body 3 loses the abutting contact. After the cover body 3 loses the abutting contact, the positioning plate 52 can be pushed, and at the same time, the second linkage mechanism 51 is unlocked from the expanded state, and the second linkage mechanism 51 can drive the positioning plate 52 to move toward the positioning position, so as to simultaneously complete the opening action of the cover body 3 and the extending action of the auxiliary mechanism 2.

Further, the second connecting shaft 75 is provided with a third elastic member 76, and the third elastic member 76 is used for providing an elastic reset force when the free end rotates. Similar to the first elastic member 32, the third elastic member 76 may be a torsion spring capable of applying an upward torsion force to the second connecting shaft 75, or may be a spring capable of providing a pushing force to the slide rail 7. Therefore, when the auxiliary mechanism 2 moves along the slide rail 7 toward the retracted position, the third elastic member 76 can drive the slide rail 7 to rotate and reset, so that the slide rail 7 can abut against the cover body 3 again when the cover body 3 moves to the closed position.

The electronic rearview mirror apparatus provided in embodiments of the present specification in a specific application scenario is further described as below.

The electronic rearview mirror apparatus includes a housing 1 having an accommodation chamber 11 and a cover plate assembly 10 disposed on the housing 1. The camera mechanism, the mirror cover and the power mechanism can be accommodated in the accommodation chamber 11 to form an integral module. When the integral module is to be mounted on a vehicle body S, a mounting hole with a contour size and shape matching a contour size and shape of the housing 1 is pre-designed on the vehicle body S, and then the integral module is mounted in the mounting hole, with the cover plate assembly 10 and the mirror cover being directed toward the outside of the vehicle body S. The shape of the mirror cover and the shape of the cover plate assembly 10 can be designed adaptively according to the shape of the vehicle body, so that the mirror cover and cover plate assembly 10 can be adapted to the overall shape of the vehicle body. When the camera mechanism is retracted into the accommodation chamber 11, the mirror cover and cover plate assembly 10 can be regarded as a part of the vehicle body S.

When the electronic rearview mirror apparatus is not in use, the first linkage mechanism 41 is in a completely contracted state, the camera mechanism is at the retracted position, and the free end 72 of the slide rail 7 abuts against the mirror cover; the second linkage mechanism 51 is in a completely expanded state, the positioning plate 52 is in an operation position, and the second elastic member 53 is in a stretched state.

When the electronic rearview mirror apparatus needs to be used, the motor 9 is started to rotate in a first direction to drive the sliding block 8 to move toward the first linkage mechanism 41, so that the sliding block 8 can drive the first linkage mechanism 41 to switch from the contracted state to the expanded state. Driven by the damping member 42, the camera mechanism is moved toward the extended position along the slope of the slide rail 7. When the roller 21 below the camera mechanism moves to the second stepped portion of the slope, the free end 72 can rotate downward around the connecting end 71 as a center, so that the cover body 3 loses the abutting contact, and the side plate in the positioning plate 52 is pushed, causing the gear to move along the rack 54. Meanwhile, the second linkage mechanism 51 is unlocked from the expanded state to switch to the contracted state, and the second linkage mechanism 51 and the second elastic member 53 pull the positioning plate 52 to move toward the positioning position. When the side plate rotates to the top of the mirror cover, the side plate limits the rotation of the mirror cover, the camera mechanism is extended through the open end, and the first linkage mechanism 41 is in a completely expanded state.

When the electronic rearview mirror apparatus does not need to be used, the motor 9 is started to rotate in a second direction to drive the sliding block 8 to move toward the second linkage mechanism 51, so that the sliding block 8 can drive the second linkage mechanism 51 to switch from the contracted state to the expanded state, so as to drive the positioning plate 52 to move toward the operation position. In the process of rotation, the gear can drive the side plate to rotate to drive the mirror cover to rotate away from the accommodation chamber 11 until the positioning plate 52 reaches the operation position, and at this time, the second linkage mechanism 51 is in a completely expanded state, and the mirror cover is closed at the open end. Meanwhile, the first linkage mechanism 41 is unlocked from the expanded state to switch to the contracted state to drive the camera mechanism to retract, and the camera mechanism moves toward the retracted position along the slide rail 7. When the camera mechanism moves toward the retracted position, the slide rail 7 is rotationally reset by the third elastic member 76, so that the free end 72 of the slide rail 7 abuts against the mirror cover again when the mirror cover is rotationally closed.

The present specification further provides a vehicle, as shown in FIGs. 1 to 13, a vehicle body S of the vehicle is provided with an opening at which an electronic rearview mirror apparatus is mounted. The electronic rearview mirror apparatus includes a housing 1 having an accommodation chamber, a camera mechanism disposed in the accommodation chamber, a mirror cover movably, and at least one power mechanism. The accommodation chamber has an open end. The mirror cover is movably disposed at the open end. The at least one power mechanism is disposed in the accommodation chamber. One of the at least one power mechanism is used to drive the camera mechanism to extend and retract through the open end.

The specification further provides a vehicle including: a vehicle body of the vehicle being provided with an accommodating cavity having an open end, and an auxiliary apparatus installed in the accommodating cavity. The auxiliary apparatus includes: an auxiliary mechanism 2 disposed in the accommodating cavity; a cover body 3 movably disposed at the open end and movable relative to the open end between an open position and a closed position, the cover body 3 being entirely accommodated in the accommodation cavity when the cover body 3 moves from the closed position toward the open position; at least one power mechanism disposed in the accommodation cavity, with one power mechanism being used for driving the auxiliary mechanism 2 to extend and retract through the open end.

In this specification, the various embodiments are described in a progressive manner, and each embodiment focuses on differences from the other embodiments, and the same or similar parts between the various embodiments may be referred to each other.

The above embodiments are only to illustrate the technical concept and features of the present invention, and are intended to enable those skilled in the art to understand the contents of the present invention and implement the invention accordingly, and are not intended to limit the scope of the present invention. Any equivalent changes or modifications made according to the spirit of the present invention shall fall within the scope of the present invention.

## Claims

1. An auxiliary apparatus comprising:
a base body having an accommodation cavity, the accommodation cavity having an open end;
an auxiliary mechanism disposed in the accommodation cavity;
a cover body movably disposed at the open end and movable relative to the open end between an open position and a closed position, the cover body being entirely accommodated in the accommodation cavity when the cover body moves from the closed position toward the open position; and
at least one power mechanism disposed in the accommodation cavity, wherein one of the at least one power mechanism is used for driving the auxiliary mechanism to extend and retract through the open end.

2. The auxiliary apparatus according to claim 1, wherein the auxiliary apparatus comprises a cover plate on which the open end is formed, and a seal disposed on at least one selected from the cover body, the cover plate, and the auxiliary mechanism.

3. The auxiliary apparatus according to claim 2, wherein the cover plate comprises an inner cover plate for mounting the cover body, and an outer cover plate provided outside the inner cover plate; and
the seal comprises a cover-body sealing ring disposed on the cover body, and a cover-plate sealing ring disposed on the outer cover plate.

4. The auxiliary apparatus according to claim 3, wherein the auxiliary mechanism comprises a base portion and a body portion, and a limiting step is formed between the base portion and the body portion; and
when the auxiliary mechanism is driven by the power mechanism to extend through the open end, the limiting step fits with the cover-plate sealing ring to seal the open end.

5. The auxiliary apparatus according to claim 1, wherein the power mechanism comprises a power source assembly, a first motion assembly, and a second motion assembly; the first motion assembly is in transmission connection with the power source assembly and is used for driving the auxiliary mechanism to move between a retracted position and an extended position; and the second motion assembly is in transmission connection with the power source assembly and is used for driving the cover body to move.

6. The auxiliary apparatus according to claim 1, wherein there are two power mechanisms, one of which is used for driving the cover body to move relative to the open end between the closed position and the open position, and the other of which is used for driving the auxiliary mechanism to extend and retract through the open end.

7. The auxiliary apparatus according to claim 1, wherein the auxiliary apparatus comprises a heating unit for heating an area between the auxiliary mechanism and the open end when the auxiliary mechanism extends through the open end.

8. The auxiliary apparatus according to claim 3, wherein the auxiliary apparatus comprises a heating unit for heating an area between the cover body and the open end when the cover body is at the closed position.

9. The auxiliary apparatus according to claim 8, wherein the heating unit is disposed on the cover-plate sealing ring.

10. The auxiliary apparatus according to claim 7 or 8, wherein the heating unit comprises a first heating unit and a second heating unit, the first heating unit is disposed on the auxiliary mechanism, and the second heating unit is disposed on the cover body.

11. The auxiliary apparatus according to claim 1, wherein the auxiliary apparatus comprises an electronic rearview mirror apparatus, the auxiliary mechanism comprises a camera mechanism, and the cover body comprises a mirror cover;
the power mechanism comprises a first motion assembly for driving the camera mechanism to move between a retracted position and an extended position, a second motion assembly for at least driving the mirror cover to be at the closed position, and a power source assembly that is in transmission connection with the first motion assembly and the second motion assembly;
when the first motion assembly, driven by the power source assembly, drives the camera mechanism to move from the extended position toward the retracted position, the second motion assembly, driven by the power source assembly, is capable of driving the mirror cover to move from the open position toward the closed position; and
the mirror cover is movable relative to the camera mechanism between the open position and the closed position, and the mirror cover is capable of being accommodated at a side close to the retracted position when the mirror cover moves from the closed position toward the open position.

12. The auxiliary apparatus according to claim 11, wherein the first motion assembly comprises a first linkage mechanism that is in transmission connection with the power source assembly, and an end portion of the first linkage mechanism is connected to the camera mechanism; and
the second motion assembly comprises a second linkage mechanism that is in transmission connection with the power source assembly, and an end portion of the second linkage mechanism is provided with a positioning plate.

13. The auxiliary apparatus according to claim 12, wherein the power source assembly comprises a motor, a lead screw that is in transmission connection with the motor, and a pulley disposed on the lead screw; the first linkage mechanism and the second linkage mechanism are connected to the pulley; and when moving on the lead screw, the pulley is capable of driving one of the first linkage mechanism and the second linkage mechanism to contract, and the other one to expand.

14. The auxiliary apparatus according to claim 12, wherein the first linkage mechanism comprises a first connecting rod unit, a second connecting rod unit, and a third connecting rod unit which are rotatably connected in sequence; the third connecting rod unit has a first connecting segment, and a second connecting segment at a predetermined angle to the first connecting segment; and the first connecting segment is connected to the camera mechanism, and the second connecting segment is provided with a damping member for providing damping to the camera mechanism.

15. The auxiliary apparatus according to claim 12, wherein the positioning plate has a positioning position and an operating position;
when the camera mechanism moves from the retracted position toward the extended position, the positioning plate is capable of moving from the operation position toward the positioning position to limit the mirror cover at the open position upon arrival of the positioning position; and
when the camera mechanism moves from the extended position toward the retracted position, the positioning plate is capable of moving from the positioning position toward the operating position to push the mirror cover to the closed position upon arrival of the operating position.

16. The auxiliary apparatus according to claim 15, wherein the positioning plate comprises a quarter gear, and a side plate connected to the gear; and the electronic rearview mirror apparatus comprises a rack engaged with the gear, and the rack is disposed on a moving path of the positioning plate.

17. The auxiliary apparatus according to claim 11, wherein the auxiliary apparatus comprises a first elastic member that provides an elastic reset force to the mirror cover;
when the camera mechanism moves from the retracted position toward the extended position, the elastic reset force provided by the first elastic member is capable of driving the mirror cover to move from the closed position toward the open position; and
when the camera mechanism moves from the extended position toward the retracted position, the second motion assembly is capable of driving the mirror cover to move from the open position toward the closed position.

18. The auxiliary apparatus according to claim 17, wherein the auxiliary apparatus comprises a slide rail disposed on a moving path of the camera mechanism, and the slide rail has a connecting end and a free end; when the camera mechanism moves from the retracted position toward the extended position, the free end rotates around the connecting end as a center to disengage from the mirror cover, and the first elastic member is capable of driving the mirror cover to move toward the open position; and when the camera mechanism moves from the extended position toward the retracted position, the free end rotates around the connecting end as a center to abut against the mirror cover.

19. The auxiliary apparatus according to claim 15, wherein the second motion assembly further comprises a second elastic member for providing an elastic reset force to the positioning plate; and
when the mirror cover moves from the closed position toward the open position, the elastic reset force applied to the positioning plate by the second elastic member enables the mirror cover to move toward the positioning position.

20. The auxiliary apparatus according to claim 18, wherein the auxiliary apparatus further comprises a third elastic member for providing an elastic reset force when the free end rotates.

21. A vehicle, wherein a vehicle body of the vehicle is provided with an accommodation cavity having an open end, the accommodation cavity is mounted with an auxiliary apparatus, and the auxiliary apparatus comprises:
an auxiliary mechanism disposed in the accommodation cavity;
a cover body movably disposed at the open end and movable relative to the open end between an open position and a closed position, the cover body being entirely accommodated in the accommodation cavity when the cover body moves from the closed position toward the open position; and
at least one power mechanism disposed in the accommodation cavity, wherein one of the at least one power mechanism is used for driving the auxiliary mechanism to extend and retract through the open end.
